# EUROPÄISCHE PATENTSCHRIFT

(11) **EP 1 522 783 B1**
(45) Veröffentlichungstag und Bekanntmachung des Hinweises auf die Patenterteilung: **12.03.2008**
(21) Anmeldenummer: 04023682.0
(22) Anmeldetag: 05.10.2004
(51) Int. Cl.: F16L 59/12, F16L 9/18

(54) **Isolierkonstruktion und Verfahren zur Herstellung einer Isolierkonstruktion und Elemente hierfür**
Insulation construction and method for the production of an insulation construction and elements therefor
Construction d'isolation et procédé de réalisation d'une construction d'isolation et éléments correspondants

(30) Priorität: 06.10.2003 DE 10346810; 06.05.2004 DE 102004023028
(43) Veröffentlichungstag der Anmeldung: 13.04.2005
(73) Patentinhaber: Gortat, Manfred, 44892 Bochum (DE)
(72) Erfinder: Ringkamp, Dietmar, 46244 Bottrop-Kirchhellen (DE); Gortat, Manfred, 44892 Bochum (DE); Tanasic, Zivko, 45661 Recklinghausen (DE)
(74) Vertreter: Wenzel & Kalkoff

(56) Entgegenhaltungen:
- EP-A- 0 527 669
- DE-A- 19 746 651
- DE-C- 830 275
- DE-C- 947 583
- DE-U- 1 845 664
- US-A- 1 586 422

## Beschreibung

Die Erfindung betrifft eine Isolierkonstruktion, ein Tragringelement, ein Abstandshalterelement, eine Befestigungsvorrichtung und ein Verfahren zur Isolierung von Rohrleitungen und Behältern.

An Rohrleitungen, die zur Übertragung von wärme- oder kältetransportierenden Medien benutzt werden, ist es von großer Bedeutung, dass die Energieverluste entlang der Strecke auf ein Minimum reduziert werden. Der Begriff Rohrleitung wird hierbei ebenso für einzelne Rohre als auch für Rohrbündel oder Kanäle verwendet. Auch bei Behältern in denen warme oder kalte Medien gehalten werden ist es von Bedeutung, daß die Wärmeübertragung an die Außenwelt verringert wird. Ebenso sollen die Oberflächentemperaturen innerhalb vorgegebener Grenzen liegen. Hierzu wird bei bekannten Isolierkonstruktionen eine äußere Isolierverblechung vorgesehen und der Raum zwischen den Rohrleitungen und der äußeren Isolierverblechung mit wärmeisolierenden Materialien ausgefüllt.

Eine bekannte Art von sich selbst tragenden Isolierverkleidungen sind die aus einem isolierenden Material bestehenden Isolierrohre verschiedener Innendurchmesser und Wandstärken zur Wärmeisolierung von Heizungsanlagen in Gebäuden. Diese Art der Isolierverkleidung ist jedoch begrenzt auf relativ geringe Rohrdurchmesser oder darüber hinaus nur mit erheblichem Aufwand herzustellen.

Weiterhin sind die üblichen Verkleidungen von größeren Rohrdurchmessern bekannt, wo Mineralwolle oder ähnliche Dämmstoffe als Wärmeisolierung aufgebracht wird und diese mit rundgeformten Blechstücken verkleidet ist. Diese Isolierung ist meistens so aufgebaut, dass zunächst Stützvorrichtungen mit Abstandhaltern für die äußere Verblechung um das zu isolierende Rohr gelegt werden. Auf diese Stützvorrichtungen wird die äußere Verblechung montiert. Der entstandene Hohlraum wird dann mit dem Isoliermaterial ausgefüllt.

Der Aufbau dieser bekannten Stützvorrichtungen für den äußeren Stütz-oder Tragring sieht abgewinkelte Flacheisen vor, die auf das Rohr aufgesetzt werden, wobei ein Schenkel auf dem Rohr aufliegt und der andere Schenkel radial absteht. Der abstehende Schenkel wird mit einem äußeren Stütz- oder Tragring verbunden. Zur Erhöhung der Isolierung kann noch eine isolierende Zwischenlage zwischen einen Winkelschenkel und den Stütz- oder Tragring gelegt werden. Desgleichen sind auch Ausführungen bekannt, wobei die eine Seite des Winkels, wie oben beschrieben, mit einem zweigeteilten äußeren Stütz- oder Tragring verbunden ist und diese beiden Segmente dann über das Rohr verspannt werden.

Nachteilig wirkt sich bei diesen Ausführungen aus, dass bei dieser Isolierung die inhomogene Verteilung des Isoliermateriales in dem Raum zwischen dem zu isolierendem Rohr und der äußeren Verkleidung zu einer fehlerhaften Isolierwirkung führt.

Bei den bekannten Ausführungen mit Mineralfasermatten, der sogenannten Mattenisolierung, werden die Mineralfasermatten zwischen die zuvor angebrachten Abstandhalter und Ringe um das Rohr gelegt. Im Bereich der Abstandhalter müssen diese Matten eingeschnitten werden. Auch hier besteht der Nachteil darin, dass bei der Verlegung der Matten um die bereits vorhandenen Abstandhalter Hohlräume frei bleiben können, die zu einer erheblichen Beeinträchtigung der Isolierwirkung führen.

Eine weitere bekannte Ausführung besteht darin, dass man zuerst die Isoliermatten um das Rohr befestigt und danach besondere Abstandhalter aus Stahl oder Keramik radial durch die Isoliermatte gedrückt werden. Die äußeren Enden dieser Abstandhalter sind mit einer klammerartigen Haltevorrichtung für den Stütz- oder Tragring ausgestattet. Entsprechende Beispiele sind in der DE-A-947583 und der DE-A-19746651 gezeigt

In der DE 197 46 651 A1 ist eine Befestigungsvorrichtung zur Herstellung von wärme- und schallisolierenden Unterkonstruktionen für Rohrleitungen beschrieben. Spezielle Isolierstege, die als keilförmiges Stück Flachstahl ausgeführt sind, werden ringförmig in die Isolierung eingesteckt, so daß die Spitze des Isoliersteges auf der Rohrleitung aufliegt und der Kopf des Isolierstegs radial nach außen zeigt. Um diese Isolierstege wird dann ein Spannband gelegt und soweit angespannt, bis durch das Andrücken der Isoliersteg an die Rohrwandung eine sichere Befestigung entsteht.

Der Nachteil dieser Ausführungen besteht darin, dass die Abstandhalter seitlich nur durch die relativ weiche Mineralfasermatte abgestützt werden und so bei der Montage sehr leicht verrutschen können. Die dabei entstehenden Hohlräume vermindern die Isolierwirkung, und die durch die Schräglage der Abstandhalter hervorgerufene Höhendifferenz kann zu einem unsauberen Erscheinungsbild der Isolierverblechung führen. Außerdem ist die Montage dieser Abstandhalter und der Stütz- oder Tragringe äu-ßerst unpraktisch.

In der DE 830 275 ist eine Stopfisolierung einer Rohrleitung beschrieben. Eine Blechummantelung weist Öffnungen auf, durch die als Abstandhalter Schrauben durchgeführt werden. Die Schrauben werden befestigt, indem Muttern von innen gegen die Ummantelung geschraubt werden.

In der DE 947 583 ist ein Abstandshalter für die Wärmeisolierung von Rohrleitungen beschrieben. Als Isolierung dient eine Mattenisolierung. Spezielle Abstandshalter, die als aus Blech bestehende Hohlkörper ausgebildet sind, werden durch die bei der Mattenisolierung verwendeten Mineralfasermatten hindurchgedrückt, bis sie sich mit ihrem verjüngten Ende gegen das abzuisolierende Rohr stützen. Anschließend werden die Abstandshalter mit einem ringförmigen Träger verbunden, auf dem sich außen die Blechummantelung abstützt.

Die US 1,586,422 offenbart eine Abdeckung für eine Heizleitung. Um direkten Kontakt mit der Leitung zu vermeiden, aber die Abstrahlung von Wärme von der Leitung zu ermöglichen, ist eine Umhüllung aus einem Lochblech-Material vorgesehen. Um die Umhüllung um die Leitung herum im Abstand anzubringen, sind Abstandshalter vorgesehen. Die Abstandshalter sind als Schrauben ausgebildet, die sich von der Wandung, wo sie in einem Gewinde einstellbar angebracht sind, bis zu einer isolierenden Abstützung auf der Leitung erstrecken.

Es ist Aufgabe der Erfindung, eine Isolierkonstruktion und ein Verfahren zur Herstellung von Isolierungen an Rohrleitungen und Behältern vorzuschlagen, bei denen auf einfache Weise eine sicher herzustellende Isolierung erreicht wird.

Diese Aufgabe wird gelöst durch Isolierkonstruktionen nach den Ansprüchen 1 und 20 sowie durch ein Verfahren nach Anspruch 21. Abhängige Ansprüche beziehen sich auf vorteilhafte Weiterbildungen der Erfindung.

Die erfindungsgemäße Isolierkonstruktion umfaßt mindestens eine Rohrleitung oder einen Behälter. Bei dem Behälter kann es sich bspw. um einen Tankbehälter handeln, der bevorzugt im Wesentlichen zylindrische Form aufweist. Im Folgenden wird allerdings zur sprachlichen Vereinfachung stets allein auf eine Isolierkonstruktion mit einer Rohrleitung Bezug genommen.

Eine erfindungsgemäße Isolierkonstruktion umfaßt weiter eine um die Rohrleitung angeordnete Isolierung und mindestens einem Tragring, der um die Isolierung angeordnet ist. Der Tragring weist radiale Führungen auf, in die Abstandshalter eingesetzt sind, die sich vom Tragring bis zur Rohrleitung erstrecken.

Die Führungen an den Tragringen weisen Durchgänge für die Abstandshalter auf, die den Durchgang passender Abstandshalter gewährleisten und eine seitliche Führung des Abstandhalters bewirken. Sie sind bevorzugt strahlenförmig zum Rohrmittelpunkt ausgerichtet. Die Führungen bewirken eine Seitenführung der Abstandshalter beim Durchgang senkrecht zum Tragring.

Die erfindungsgemäße Befestigungsvorrichtung weist ein entsprechendes, erfindungsgemäßes Tragringelement und zugehörige, erfindungsgemäße Abstandshalter auf. Die

Führungen dienen zum radialen Durchführen der Abstandshalter, wobei diese durch die Führungen geführt werden, so daß die radiale Ausrichtung gewährleistet bleibt. Die erfindungsgemäßen Abstandshalter weisen ein mindestens im wesentlichen zylindrisches Element auf, das durch die Führung durchführbar ist. Die Abstandshalter weisen ein Befestigungs- oder Rastelement, bspw. ein Gewinde oder ein Nut auf, mit dem sie nach dem Durchführen durch die Führung am Tragring befestigt werden können.

Das erfindungsgemäße Verfahren sieht vor, daß zunächst eine Rohrleitung mit Isolierung vorliegt. Diese wird in einem ersten Schritt erstellt. Nun wird ein Tragring oder eine Blechverkleidung mit Führungen um die Isolierung angebracht, und Abstandshalter durch die Führungen durchgeführt, in die Isolierung bis zur Rohrleitung durchgesteckt und dann am Tragring fixiert.

Im Gegensatz zu den bekannten Ausführungen stellt dies eine erhebliche Verbesserung bei der Handhabung dar. Auf einfache Weise können Isoliermatten lückenlos um das zu isolierende Rohr gelegt werden, ohne dass eine Stützvorrichtung im Wege ist und die Matte dort eingeschnitten werden muss. Die Tragringe können in der Längsrichtung der Isolierung verschoben werden. Dadurch ist es möglich, die genaue Lage festzulegen. Die Führungen dienen zum exakten, geführten Einschub der Abstandhalter, so daß diese beim Durchdringen der Isolierschicht seitlich nicht wesentlich verrutschen können.

Nach einer Weiterbildung kann der Tragring aus mindestens zwei Segmenten bestehen. Diese können miteinander verschraubt oder verklammert sein. So läßt sich der Tragring leicht um die Isolierung herum anbringen.

Gemäß einer Weiterbildung der Erfindung liegen die Abstandshalter mit einem Ende an der Rohrleitung ohne weitere Befestigung an. Sie können an diesem Ende auch ein Isolierelement aufweisen, bspw. eine wärmebeständige Elastomerkappe oder keramische Kappe, die mit den Abstandhaltern durch die Isolierschicht gedrückt wird. Diese erhöht den Wärme- bzw. Kältedurchgangswiderstand. Die Abstandshalter sind bevorzugt von länglicher Form, bspw. zylindrisch. Je nach Rohrdurchmesser werden bevorzugt mindestens drei dieser Abstandhalter verwendet, wobei der Tragring dann mindestens drei Führungen aufweist, die in bestimmten Abständen am Tragring angebracht sind.

Eine Weiterbildung sieht ein variables Element vor, das die Wärmeausdehnung des Rohrs ermöglicht. Hierfür kann bspw. der Abstandshalter teleskopisch federnd ausgebildet sein, oder der Abstandshalter sich über eine Feder am Ring abstützen.

Gemäß einer Weiterbildung der Erfindung weist der Tragring mindestens eine in Umfangsrichtung verlaufende Sicke auf. Diese bewirkt einerseits eine Versteifung des Rings. Andererseits kann sie, wenn eine bevorzugt vorgesehene äußere Blechverkleidung verwendet wird, genutzt werden um eine Verbindung des Tragringes mit der äußeren Verkleidung zu erreichen und damit ein späteres Verrutschen zu verhindern. Hierfür kann vorgesehen sein, daß die äußere Blechverkleidung in die Sicke eingreift. Bei der Montage kann der Ring entlang des Rohres so verschoben werden, daß der Eingriff gewährleistet ist. Bevorzugt ist die Blechverkleidung axial aus Stücken aufgebaut, und die Tragringe werden jeweils an den Nahtstellen angeordnet.

Für die Befestigung bzw. Sicherung der Abstandshalter am Tragring werden verschiedene Lösungen vorgeschlagen.

Gemäß einer ersten Weiterbildung ist vorgesehen, daß die Führungen ein Gewinde aufweisen und die Abstandhalter mindestens an einem Ende einen entsprechenden, passenden Gewindebereich aufweisen. So kann der Abstandshalter durch Einschrauben fixiert werden. Um ein Gewinde am Tragring zu bilden, können bevorzugt Einnietmuttern oder Anschweißmuttern verwendet werden.

Gemäß einer anderen Weiterbildung ist vorgesehen, daß Führungen und Abstandshalter durch eine Rastverbindung verbunden sind. Hierfür können bspw. die Führungen und/oder die Abstandshalter eine Nut aufweisen, in die ein Rastelement einrastet. Bevorzugt bestehen die Führungen aus Einstanzhülsen mit einer ringförmigen Nut und einem eingelassenen Spannring. Entsprechend weist der Abstandhalter eine ringförmige Nut auf, in die der Spannring der Einstanzhülse einrastet. Alternativ können auch Anschweißhülsen mit Spannring verwendet werden. Schließlich ist es ebenso möglich, Einstanzhülsen mit einer eingelassenen Federscheibe zu verwenden.

Gemäß einer anderen Weiterbildung erfolgt keine vollständige Verrastung, sondern der Abstandshalter wird lediglich daran gehindert, wieder aus der Führung auszutreten. Hierfür weisen die Führungen an der Führöffnung mindestens einen Sicherungsring auf, um das Wiederaustreten des Abstandhalters nach dem Durchführen über den Sicherungsring hinaus zu verhindern. Es kann auch ein Sicherungselement vorgesehen sein, das schräg und am Absstandshalter reibend angeordnet ist. Der Abstandshalter ist in Richtung des Rohres durchführbar, aber einer Bewegung in Gegenrichtung wird eine erhöhte Reibungskraft entgegensetzt.

Bei einer zweiten Art einer erfindungsgemäßen Isolierkonstruktion sind die Führungen direkt an der äußeren Blechverkleidung angebracht. Diese Ausführung kann insbesondere für größere Rohrdurchmesser oder größere Blechdicken eingesetzt werden.

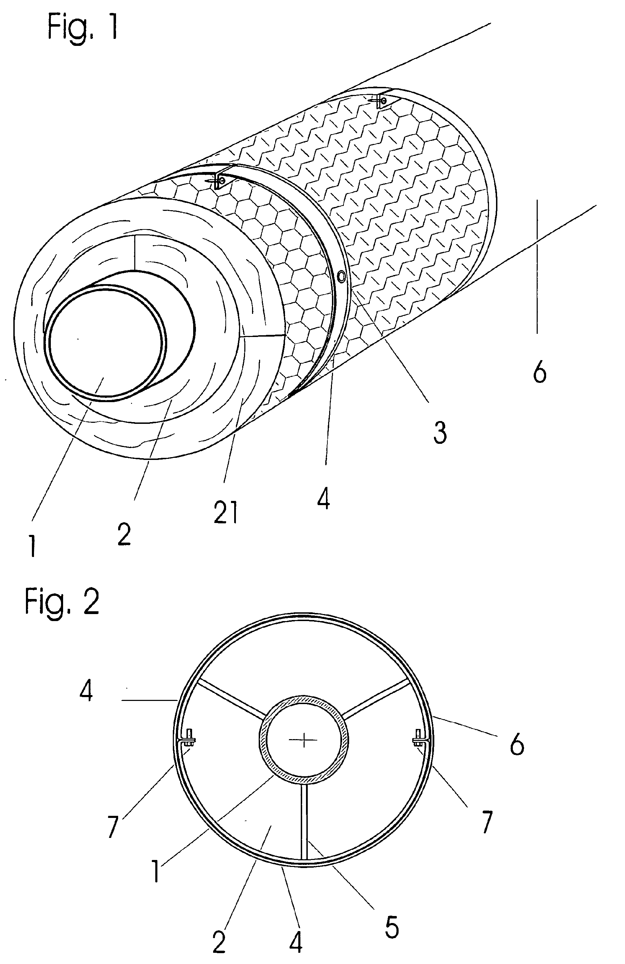

Nachfolgend werden Ausführungsformen der Erfindung anhand von Zeichnungen näher beschrieben. Hierbei zeigen
- Fig. 1: in perspektivischer Ansicht eine Isolierkonstruktion
- Fig. 2: eine Querschnittsansicht durch die Isolierkonstruktion aus Fig. 1
- Fig. 3: eine Längsschnittsansicht durch eine Isolierkonstruktion mit einem Abstandshalter und einer Führung gemäß einer ersten Ausführungsform;
- Fig. 4: eine Längsschnittsansicht durch eine Isolierkonstruktion mit einem Abstandshalter und einer Führung gemäß einer zweiten Ausführungsform;
- Fig. 5: eine Längsschnittsansicht durch eine Isolierkonstruktion mit einem Abstandshalter und einer Führung gemäß einer dritten Ausführungsform;
- Fig. 6: eine Längsschnittsansicht durch eine Führung und einen Abstandshalter gemäß einer vierten Ausführungsform;
- Fig. 7: eine Längsschnittsansicht durch eine Führung gemäß einer fünften Ausführungsform.

Zeichnung 1 zeigt grundsätzlich eine Isolierkonstruktion mit einer mehrlagigen, versetzten Mattenisolierung.

Um ein Rohr 1 wird in einem ersten Arbeitsgang eine erste Lage von Isoliermatten 2 befestigt. Falls erforderliche werden in einem weiteren Arbeitsgang als weitere Lage Isoliermatten 21 angebracht, und zwar in der Weise, dass sich die jeweiligen Stoßstellen der Mattten 2, 21 sowohl in Längs- als auch in Querrichtung überlappen.

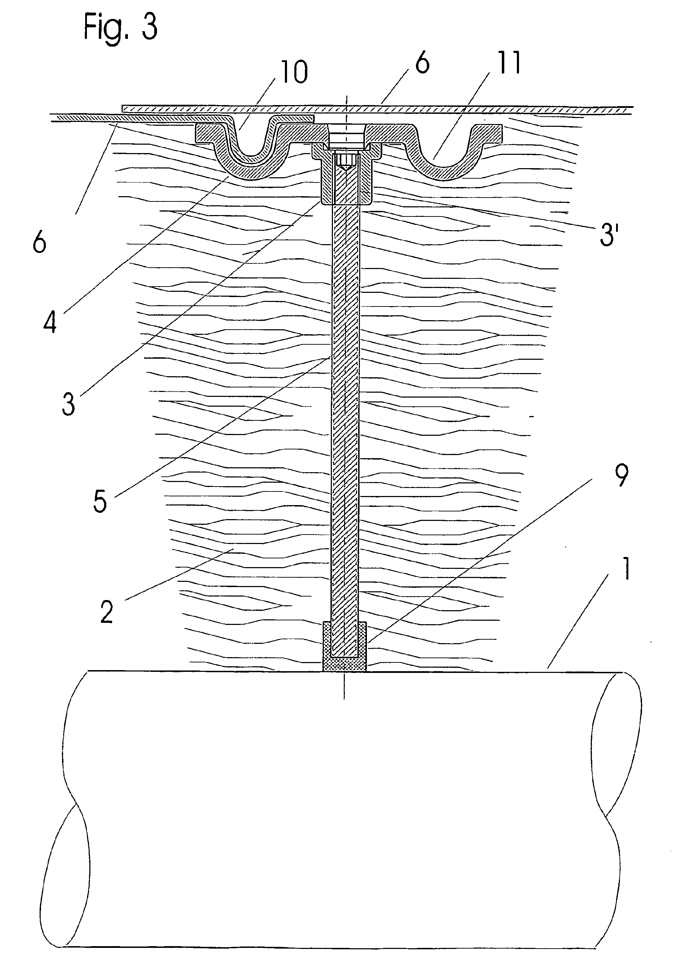

Um die Isolierung 2, 21 herum werden in bestimmten Abständen aus zwei Segmenten bestehende Tragringe 4 gelegt und die beiden Segmente der Tragringe 4 miteinander mit Schrauben 7 verschraubt. Vorteilhaft wirkt sich hierbei aus, dass die Tragringe 4 noch in Längsrichtung der Isolierung verschoben werden können. Dadurch ist es möglich, die genaue Lage festzulegen, so daß eine danach aufzubringende äußere Verblechung 6 mit einer an den Enden gebildeten Sicke 10 (vgl. Fig. 3) in eine entsprechende Sicke 11 des Tragringes 4 einrastet.

Erst jetzt werden Abstandhalter 5 durch Führungen 3 in den Tragring 4 eingebracht und durchdringen dabei die Isolierung 2,21, indem sie diese lediglich verdrängen. Die Abstandshalter 5 werden an den Führungen 3 der Tragringe 4 befestigt, wie unten näher erläutert wird. Die Abstandshalter sind als zylindrische Stifte ausgebildet.

Zeichnung 2 zeigt beispielhaft einen Schnitt durch eine fertige Isolierkonstruktion. Der Tragring 4 besteht hier aus zwei Segmenten, die miteinander verschraubt sind. Die Abstandhalter 5 werden von außen durch die Isolierung 2 und 21 bis auf das Rohr 1 durchgeführt. Sie schließen dann außen mit dem Tragring 4 bündig ab. Eine genaue Auslegung der Länge des Abstandhalters 5 gewährleistet eine saubere Fixierung der Isolierkonstruktion.

Beim Erstellen der gezeigten Isolierkonstruktion wird nach der Befestigung der Tragringe 4 auf der Isolierung die äußere Verblechung 6 angebracht. Diese weist, wie Fig. 3 zeigt, Sicken 10 in Umfangsrichtung auf. Die Verblechung 6 kann wie gezeigt so angebracht sein, dass die Sicke 10 in eine Sicke 11 des Tragrings 4 einrastet. Das (in Rohrrichtung) darauffolgende Stück der Verblechung 6 überdeckt und schützt dann den Tragring 4.

Für die Ausgestaltung der Führungen 3 an den Tragringen und die Befestigung der Abstandshalter 5 werden verschiedene Ausführungen vorgeschlagen.

In Fig. 3 ist eine erste Ausführungsform der Führungen 3 und Abstandshalter 5 gezeigt. Hier sind die Abstandhalter handelsübliche Schrauben nach DIN 913, die durch in den Tragring 4 eingelassene Führungen 3, die ein Gewinde aufweisen, eingeschraubt werden. Die Führungen 3 sind als Einstanz- oder Anschweißmuttern ausgebildet. Die Gewindehöhe dieser Muttern ist so gewählt, dass der Gewinde-Abstandhalter nur einen minimalen seitlichen Versatz zulässt (Seitenführung).

Wie in Fig. 3 sichtbar weist die Führung 3 ein Loch 3' mit einem Gewinde auf, durch das der Abstandshalter 5 durchgeschraubt ist. Der Abstandshalter 5 weist an seinem rohrseitigen Ende zur Erhöhung der Isolierwirkung eine wärmeisolierende Kappe 9 auf. Diese wird beim Einschrauben über das Ende geschoben und mit dem Abstandshalter 5 durch die Isolierung gedrückt. Die Führungen 3 sind am Tragring 4 in bestimmten Abständen eingelassen. Bei der Montage werden die Abstandhalter 5 durch die Führungsmuttern bis zur Rohrwandung durchgeschraubt.

Wie bereits erwähnt weist der äußere Tragring 4 vorteilhaft zwei Sicken 11 auf, die sich bevorzugt über dem gesamten Umfang erstrecken. Diese dienen zum einen der Verstärkung der Steifigkeit des Tragringes 4 und zum anderen kann hier, wie in Fig. 3 gezeigt, eine Sicke 10 des Verkleidungsblechs 6 einrasten. Die Verkleidungsbleche 6 werden in überlappender Anordnung angebracht, so daß die Sicken 10, 11 abgedeckt sind. Die Ausführung der Sicken 10 verhindert ein nachträgliches Verrutschen des Tragringes 4 und gewährleistet damit eine hohlraumfreie Isolierung.

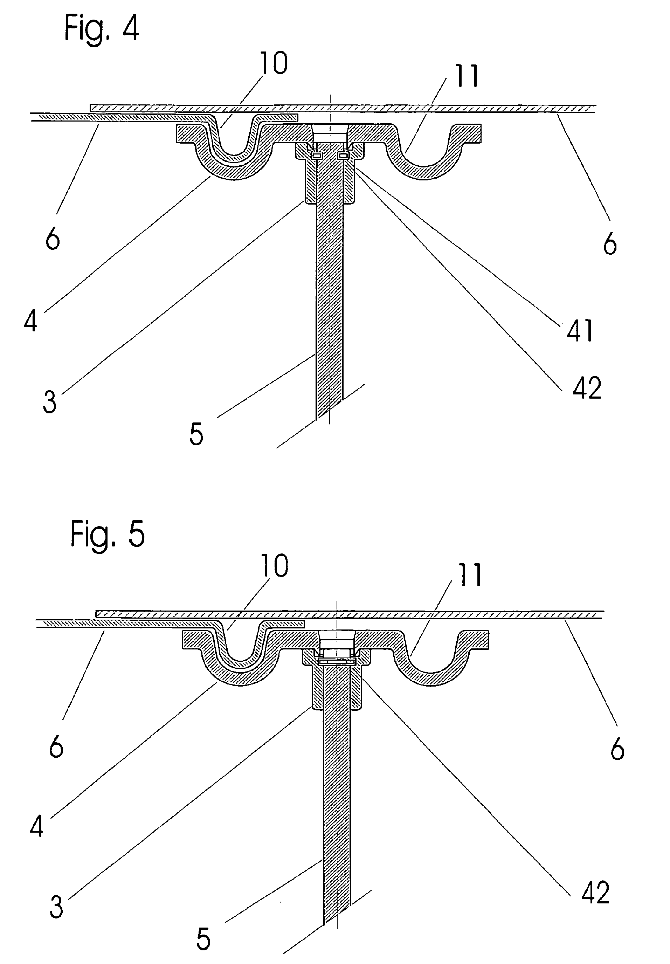

Fig. 4 zeigt den Schnitt einer zweiten Ausführungsform. Hier besteht der Abstandhalter 5 aus einem runden Stahlstift. Bei dieser Ausführung werden Führungen 3 in Form von Niethülsen bzw. Anschweißhülsen, mit einer ringförmigen Nut in dem Tragring 4 befestigt. Ein Spannring 42, der in der Hülse 3 eingelassen ist, rastet nach dem Einschieben des Abstandhalters 5 durch die Führung 3 in einer Nut 41 am Abstandshalter 5 ein. Anstatt des gezeigten runden Stahlstiftes sind auch andere Materialien und Formen einsetzbar.

Fig. 5 zeigt eine dritte Ausführungsform. Hier erfolgt keine vollständige Verrastung, d.h. Fixierung des Abstandshalters 5 in beide axiale Richtungen. Ein Sicherungsring 42 verhindert, dass der Abstandhalter nach dem Einschieben durch die Führungshülse 3 wieder austreten kann, indem er den Abstandshalter 5 an dessen hinterem Ende blockiert.

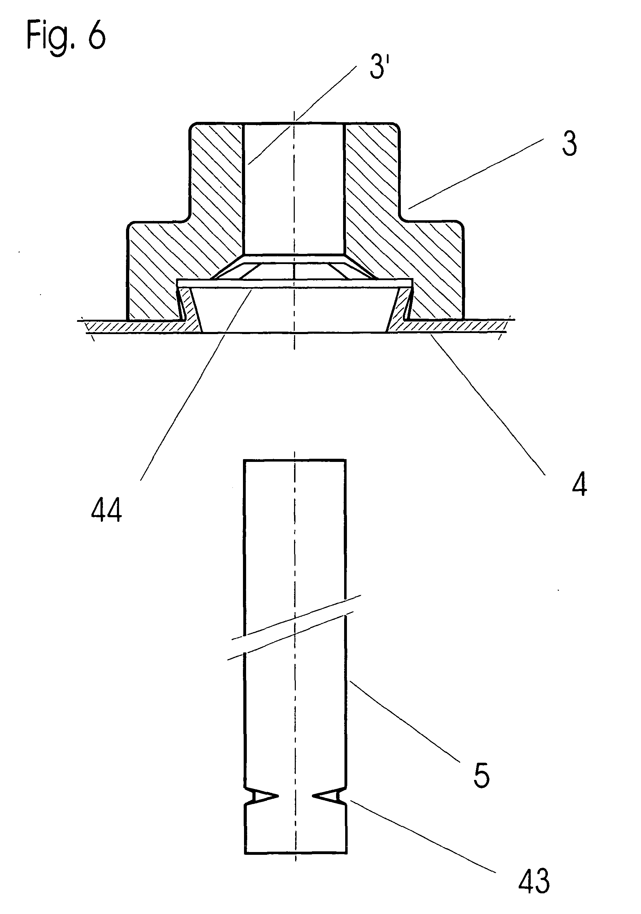

In Fig. 6 wird eine vierte Ausführungsform der Führungshülse 3 detailliert dargestellt. Hierbei wird in einer Ausnehmung eine handelsübliche Federscheibe 44, wie sie auch zur Sicherung von Wellen eingesetzt wird, eingelegt. Diese wird beim Einpressen der Führungshülse 3 in den Tragring 4 durch das umgebördelte Material des Tragringes 4 gehalten.

In dem Rundstahl-Abstandhalter 5 können beim Ablängen zwei Kerben 43 eingepresst werden. In diese rastet beim Einschieben des Abstandhalters 5 in die Öffnung 3' der Führungshülse 3 die Federscheibe 44 ein. Durch die genaue Bestimmung der Längen der Abstandhalter 5 bzw. der Lage der Kerben 43 ist eine exakte Fixierung des Tragringes 4 um die Rohrleitung 1 möglich.

Alternativ kann auf die Kerben 43 verzichtet werden. Die Federscheibe 44 liegt bei der Durchführung der Abstandshalter 5 reibend an diesen an. Durch die schräge Anordnung der anliegenden Teile der Federscheibe 44 lassen sich die Abstandshalter 5 in Richtung auf das Rohr 1 durch die Federscheibe führen. Bei einer gegensätzlichen Bewegung aber ergibt sich eine Klemmwirkung, so daß die Abstandshalter 5 festgehalten werden.

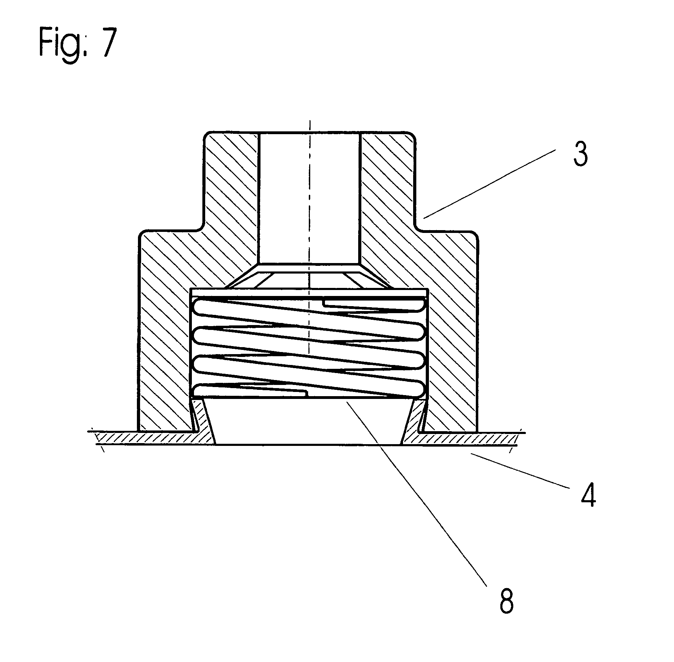

In einer fünften Ausführungsform (Fig. 7) ist in der Führung 3 zwischen der Umbördelung des Tragringes 4 und der Federscheibe 44 eine Druckfeder 8 vorgesehen. Diese dient als variables Element, d.h. sie ermöglicht durch Veränderung ihrer Länge eine Aufnahme bspw. von temperaturbedingten Durchmesseränderungen der Rohrleitung. Alternativ oder zusätzlich kann ein flexibles Element auch am Abstandshalter 5 vorgesehen sein. Die Anordnung eines flexiblen Elements kann nicht nur wie gezeigt in einer Ausführung mit Federscheibe entsprechend der vierten Ausführungsform, sondern auch in Verbindung mit anderen Ausführungsformen vorgesehen sein.

Die oben dargestellten Beispiele zweigen jeweils die Isolierung von Rohren. Allerdings läßt sich dieselbe Isolierkonstruktion in gleicher Weise auch an Behältern, bspw. Tankbehältern anbringen.

## Patentansprüche

1. Isolierkonstruktion mit
- mindestens einer Rohrleitung (1) oder einem Behälter,
- einer Isolierung (2) mit Isoliermatten um die Rohrleitung (1) oder den Behälter,
- mindestens einem Tragring (4), der um die Isolierung (2) angeordnet ist,
- und Abstandshaltern (5), die sich vom Tragring (4) bis zur Rohrleitung (1) oder bis zum Behälter erstrecken,
**dadurch gekennzeichnet, dass** der Tragring (4) Führungen (3) mit Führöffnungen (3') aufweist und dass die Abstandhalter (5) in den Führungen (3) eingesetzt sind, wobei durch die Führungen (3) eine seitliche Führung zur radialen Ausrichtung der Abstandshalter (5) gewährleistet ist.

2. Konstruktion nach Anspruch 1, bei der
- die Abstandshalter (5) mit einem Ende an der Rohrleitung (1) oder dem Behälter ohne weitere Befestigung anliegen.

3. Konstruktion nach einem der vorangehenden Ansprüche, bei der
- die Abstandshalter (5) von länglicher Form, bevorzugt zylindrisch ausgebildet sind.

4. Konstruktion nach einem der vorangehenden Ansprüche, bei der
- der Tragring (4) aus mindestens zwei Segmenten besteht.

5. Konstruktion nach einem der vorangehenden Ansprüche, bei der
- der Tragring (4) mindestens drei Führungen (3) aufweist, die in bestimmten Abständen am Tragring (4) angebracht sind.

6. Konstruktion nach einem der vorangehenden Ansprüche, bei der
- die Abstandhalter (5) an einem Ende ein Isolierelement (9) aufweisen.

7. Konstruktion nach einem der vorangehenden Ansprüche, bei der
- der Tragring (4) mindestens eine in Umfangsrichtung verlaufende Sicke (11) aufweist.

8. Konstruktion nach einem der vorangehenden Ansprüche, bei der
- eine äußere Blechverkleidung (6) vorgesehen ist.

9. Konstruktion nach Anspruch 7 und 8, bei der
- die äußere Blechverkleidung (6) in die Sicke (11) des Tragrings (4) eingreift.

10. Konstruktion nach einem der vorangehenden Ansprüche, bei der
- an der Führung (3) und/oder dem Abstandshalter (5) ein variables Element (8) vorgesehen ist, um eine Wärmeausdehnung des Rohrs (1) oder des Behälters zu gewährleisten.

11. Konstruktion nach einem der vorangehenden Ansprüche, bei der
- die Führungen (3) ein Gewinde aufweisen, und die Abstandhalter (5) mindestens an einem Ende einen Gewindebereich aufweisen.

12. Konstruktion nach Anspruch 11, bei der
- die Führungen (3) gebildet sind durch Einnietmuttern oder Anschweißmuttern.

13. Konstruktion nach einem der vorangehenden Ansprüche, bei der
- an den Führungen (3) ein Sicherungselement (44) vorgesehen ist, an dem die Abstandshalter (5) in Richtung des Rohrs (1) oder des Behälters vorbeigeführt werden können,
- wobei das Sicherungselement (44) am Absstandshalter schräg zur Durchführungsrichtung reibend angeordnet ist, so daß einer Bewegung in Gegenrichtung eine erhöhte Reibungskraft entgegensetzt wird.

14. Konstruktion nach einem der vorangehenden Ansprüche, bei der
- die Führungen (3) und Abstandshalter (5) durch eine Rastverbindung verbunden sind.

15. Konstruktion nach Anspruch 14, bei der
- die Führungen (3) und/oder die Abstandshalter (5) eine Nut aufweisen, in die ein Rastelement (42) einrastet.

16. Konstruktion nach Anspruch 14 oder 15, bei der
- die Führungen (3) aus Einstanzhülsen mit einer ringförmigen Nut und einem eingelassenen Spannring (42) bestehen
- und der Abstandhalter (5) im oberen Bereich eine ringförmige Nut aufweist, in die der Spannring der Einstanzhülse einrastet.

17. Konstruktion nach Anspruch 14 oder 15, bei der
- die Führungen (3) aus Anschweißhülsen mit einem eingelassenen Spannring (42) bestehen,
- und der Abstandhalter (5) im oberen Bereich eine ringförmige Nut aufweist, die in den Spannring der Anschweißhülse einrastet.

18. Konstruktion nach Anspruch 14 oder 15, bei der
- die Führungen (3) aus Einstanzhülsen mit einer eingelassenen Federscheibe (44) bestehen
- und der Abstandhalter (5) im oberen Bereich mindestens eine Kerbe (43) aufweist, in welche die Federscheibe (44) der Einstanzhülse einrastet.

19. Konstruktion nach einem der vorangehenden Ansprüche, bei der
- die Führungen eine Führöffnung (3') zum Durchführen eines Abstandhalters aufweisen,
- und an den Führungen (3) Sicherungsringe (42) vorgesehen sind, um das Wiederaustreten des Abstandhalters (5) nach dem Durchführen über den Sicherungsring (42) hinaus zu verhindern.

20. Isolierkonstruktion mit
- mindestens einer Rohrleitung (1) oder einem Behälter
- einer Isolierung (2) mit Isoliermatten um die Rohrleitung (1) oder den Behälter
- einer äußeren Blechverkleidung (6)
- und Abstandshaltern (5), die sich von der Blechverkleidung (6) bis zur Rohrleitung (1) oder bis zum Behälter erstrekken,
**dadurch gekennzeichnet, dass** die Blechverkleidung (6) Führungen (3) mit Führöffnungen (3') aufweist und dass die Abstandhalter (5) in den Führungen (3) eingesetzt sind, wobei durch die Führungen (3) eine seitliche Führung zur radialen Ausrichtung der Abstandshalter (5) gewährleistet ist.

21. Verfahren zur Herstellung einer Isolierkonstruktion, bei dem
- an einer Rohrleitung (1) oder einem Behälter zunächst eine Isolierung (2) mit Isoliermatten angebracht wird,
- dann mindestens ein Tragring (4) oder eine Blechverkleidung um die Isolierung (2) angebracht wird, wobei Führungen (3) mit Führöffnungen (3') am Tragring (4) oder an der Blechverkleidung vorgesehen sind,
- und durch die Führöffnungen (3') Abstandshalter (5) durchgeführt und in die Isolierung (2) bis zur Rohrleitung (1) oder bis zum Behälter durchgesteckt und dann am Tragring (4) oder an der Blechverkleidung fixiert werden, wobei sie beim Durchgang durch die Führöffnungen (3') so durch die Führungen (3) geführt werden, daß eine radiale Ausrichtung gewährleistet ist.

## Claims

1. An insulating construction with
- at least one conduit (1) or a container,
- an insulation (2) with insulating mats around the conduit (1) or the container,
- at least one support ring (4), which is arranged around the insulation (2),
- and spacers (5), which extend from the support ring (4) to the conduit (1) or to the container,
**characterized in that** the support ring (4) has guides (3) with guide openings (3') and that the spacers (5) are inserted into the guides (3), wherein a lateral guidance for the radial orientation of the spacers (5) is guaranteed by the guides (3).

2. The construction according to claim 1, in which
- the spacers (5) lie with one end against the conduit (1) or the container without any further fastening.

3. The construction according to one of the preceding claims, in which
- the spacers (5) are built with an oblong form, preferably cylindrically.

4. The construction according to one of the preceding claims, in which
- the support ring (4) consists of at least two segments.

5. The construction according to one of the preceding claims, in which
- the support ring (4) has at least three guides (3), which are attached at specific distances on the support ring (4).

6. The construction according to one of the preceding claims, in which
- the spacers (5) have an insulating element (9) on one end.

7. The construction according to one of the preceding claims, in which
- the support ring (4) has at least one crimp (11) running in the circumferential direction.

8. The construction according to one of the preceding claims, in which
- an outer sheet metal covering (6) is provided.

9. The construction according to claim 7 and 8, in which
- the outer sheet metal covering (6) engages in the crimp (11) of the support ring (4).

10. The construction according to one of the preceding claims, in which
- a variable element (8) is provided on the guide (3) and / or the spacer (5), to ensure a thermal expansion of the pipe (1) or the container.

11. The construction according to one of the preceding claims, in which
- the guides (3) have a thread, and the spacers (5) have a threaded region at least on one end.

12. The construction according to claim 11, in which
- the guides (3) are formed by riveting nuts or weld nuts.

13. The construction according to one of the preceding claims, in which
- provided on the guides (3) is a securing element (44), past which the spacers (5) can be guided in the direction of the pipe (1) or the container,
- wherein the securing element (44) is arranged frictionally on the spacer, obliquely to the pass-through direction, such that a movement in the opposite direction is opposed by an increased frictional force.

14. The construction according to one of the preceding claims, in which
- the guides (3) and the spacers (5) are connected by a locking connection.

15. The construction according to claim 14, in which
- the guides (3) and / or the spacers (5) have a groove, in which a locking element (42) engages.

16. The construction according to claim 14 or 15, in which
- the guides (3) are composed of stamped sleeves with a ring-shaped groove and an inserted clamping ring (42)
- and, the spacer (5) has in the upper region a ring-shaped groove, in which the clamping ring of the stamped sleeve engages.

17. The construction according to claim 14 or 15, in which
- the guides (3) are composed of welded sleeves with an inserted clamping ring (42),
- and, the spacer (5) has in the upper region a ring-shaped groove, in which the clamping ring of the welded sleeve engages.

18. The construction according to claim 14 or 15, in which
- the guides (3) are composed of stamped sleeves with an inserted spring washer (44),
- and, the spacer (5) has in the upper region at least one indentation (43), in which the spring washer (44) of the stamped sleeve engages.

19. The construction according to one of the preceding claims, in which
- the guides have a guide opening (3') for the through-passage of a spacer,
- and securing rings (42) are provided on the guides (3), in order to prevent the re-emergence of the spacer (5) after the through passage beyond the securing ring (42).

20. An insulating construction with
- at least one conduit (1) or a container,
- an insulation (2) with insulating mats around the conduit (1) or the container,
- an outer sheet metal covering (6)
- and spacers (5), which extend from the sheet metal covering (6) to the conduit (1) or to the container,
**characterized in that** the sheet metal covering (6) has guides (3) with guide openings (3') and that the spacers (5) are inserted in the guides (3), wherein a lateral guidance for the radial orientation of the spacer (5) is guaranteed by the guides (3).

21. A method for the production of an insulating construction, in which
- first, an insulation (2) with insulating mats is attached to a conduit (1) or a container,
- then, at least one support ring (4) or a sheet metal covering is attached around the insulation (2), wherein guides (3) with guide openings (3') are provided on the support ring (4) or on the sheet metal covering,
- and spacers (5) are guided through the guide openings (3') and then are stuck into the insulation (2) through to the conduit (1) or the container, and are then fixed to the support ring (4) or to the sheet metal covering, wherein they are guided during passage through the guide openings (3'), in such a way through the guides (3) that a radial direction is guaranteed.

## Revendications

1. Construction isolante avec
- au moins une conduite tubulaire (1) ou un réservoir,
- une isolation (2) avec des mats isolants autour de la conduite tubulaire (1) ou du réservoir,
- au moins un anneau de support (4) qui est disposé autour de l'isolation (2),
- et des pièces d'écartement (5) qui s'étendent depuis l'anneau de support (4) jusqu'à la conduite tubulaire (1) ou jusqu'au réservoir,
**caractérisée en ce que** l'anneau de support (4) présente des guides (3) avec des ouvertures de guidage (3'), et **en ce que** les pièces d'écartement (5) sont insérées dans les guides (3), un guidage latéral pour l'alignement radial des pièces d'écartement (5) étant assuré par les guides (3).

2. Construction selon la revendication 1, dans laquelle
- les pièces d'écartement (5) appuient par une extrémité sur la conduite tubulaire (1) ou le réservoir sans autre fixation.

3. Construction selon une des revendications précédentes, dans laquelle
- les pièces d'écartement (5) sont de forme oblongue, de préférence cylindrique.

4. Construction selon une des revendications précédentes, dans laquelle
- l'anneau de support (4) est composé d'au moins deux segments.

5. Construction selon une des revendications précédentes, dans laquelle
- l'anneau de support (4) présente au moins trois guides (3) qui sont placés sur l'anneau de support (4) avec des intervalles déterminés.

6. Construction selon une des revendications précédentes, dans laquelle
- les pièces d'écartement (5) présentent à une extrémité un élément isolant (9).

7. Construction selon une des revendications précédentes, dans laquelle
- l'anneau de support (4) présente au moins une moulure (11) disposée dans le sens circonférentiel.

8. Construction selon une des revendications précédentes, dans laquelle
- il est prévu un revêtement en tôle extérieur (6).

9. Construction selon les revendications 7 et 8, dans laquelle
- le revêtement en tôle extérieur (6) pénètre dans la moulure (11) de l'anneau de support (4).

10. Construction selon une des revendications précédentes, dans laquelle
- il est prévu, sur le guide (3) et/ou sur la pièce d'écartement (5), un élément variable (8) pour permettre une dilatation thermique du tube (1) ou du réservoir.

11. Construction selon une des revendications précédentes, dans laquelle
- les guides (3) présentent un filet, et les pièces d'écartement (5) présentent au moins à une extrémité une zone filetée.

12. Construction selon la revendication 11, dans laquelle
- les guides (3) sont formés par des écrous rivés ou des écrous soudés.

13. Construction selon une des revendications précédentes, dans laquelle
- il est prévu sur les guides (3) un élément de blocage (44) sur lequel les pièces d'écartement (5) peuvent être déplacées en direction du tube (1) ou du réservoir,
- l'élément de blocage (44) étant disposé en friction sur la pièce d'écartement obliquement par rapport à la direction de passage de sorte qu'une force de frottement accrue s'oppose à un mouvement en sens inverse.

14. Construction selon une des revendications précédentes, dans laquelle
- les guides (3) et la pièce d'écartement (5) sont raccordés par un raccordement cranté.

15. Construction selon la revendication 14, dans laquelle
- les guides (3) et/ou les pièces d'écartement (5) présentent une rainure dans laquelle s'enclenche un élément cranté (42).

16. Construction selon la revendication 14 ou 15, dans laquelle
- les guides (3) se composent de douilles estampées avec une rainure annulaire et une bague de serrage (42) encastrée
- et la pièce d'écartement (5) présente dans la zone supérieure une rainure annulaire dans laquelle s'enclenche la bague de serrage de la douille estampée.

17. Construction selon la revendication 14 ou 15, dans laquelle
- les guides (3) se composent de douilles soudées avec une bague de serrage (42) encastrée,
- et la pièce d'écartement (5) présente dans la zone supérieure une rainure annulaire qui s'enclenche dans la bague de serrage de la douille soudée.

18. Construction selon la revendication 14 ou 15, dans laquelle
- les guides (3) se composent de douilles estampées avec une rondelle élastique (44) encastrée
- et la pièce d'écartement (5) présente dans la zone supérieure au moins une entaille (43) dans laquelle s'enclenche la rondelle élastique (44) de la douille estampée.

19. Construction selon une des revendications précédentes, dans laquelle
- les guides présentent une ouverture de guidage (3') pour le passage d'une pièce d'écartement,
- il est prévu, sur les guides (3), des bagues de blocage (42) pour empêcher la pièce d'écartement (5) de ressortir après le passage à travers la bague de blocage (42).

20. Construction isolante avec
- au moins une conduite tubulaire (1) ou un réservoir
- une isolation (2) avec des mats isolants autour de la conduite tubulaire (1) ou du réservoir
- un revêtement en tôle (6) extérieur,
- et des pièces d'écartement (5) qui s'étendent depuis le revêtement en tôle (6) jusqu'à la conduite tubulaire (1) ou jusqu'au réservoir, **caractérisée en ce que** le revêtement en tôle (6) présente des guides (3) avec des ouvertures de guidage (3'), et **en ce que** les pièces d'écartement (5) sont insérées dans les guides (3), un guidage latéral pour l'alignement radial des pièces d'écartement (5) étant assuré par les guides (3).

21. Procédé de fabrication d'une construction isolante, dans lequel
- une isolation (2) avec des mats isolants est d'abord placée sur une conduite tubulaire (1) ou un réservoir,
- au moins un anneau de support (4) ou un revêtement en tôle est ensuite placé autour de l'isolation (2), des guides (3) avec des ouvertures de guidage (3') étant prévus sur l'anneau de support (4) ou sur le revêtement en tôle,
- et des pièces d'écartement (5) sont passées à travers les ouvertures de guidage (3') et enfoncées dans l'isolation (2) jusqu'à la conduite tubulaire (1) ou jusqu'au réservoir, et puis sont fixées sur l'anneau de support (4) ou sur le revêtement en tôle, étant conduites à travers les guides (3) lors du passage à travers les ouvertures de guidage (3') de sorte qu'un alignement radial est assuré.
